(19) Europäisches Patentamt
European Patent Office
Office européen des brevets

(11) **EP 1 077 497 A1**

(12) **EUROPEAN PATENT APPLICATION**

(43) Date of publication:
**21.02.2001 Bulletin 2001/08**

(51) Int. Cl.[7]: **H01M 2/20**

(21) Application number: **00117750.0**

(22) Date of filing: **17.08.2000**

(84) Designated Contracting States:
**AT BE CH CY DE DK ES FI FR GB GR IE IT LI LU MC NL PT SE**
Designated Extension States:
**AL LT LV MK RO SI**

(30) Priority: **17.08.1999 JP 23089899**
**16.06.2000 JP 2000181982**
**22.06.2000 JP 2000188000**

(71) Applicant: **GS-MELCOTEC CO.; LTD.**
**Kyoto-shi, Kyoto 601-8397 (JP)**

(72) Inventor:
**Yoshimura, Koji,**
**c/o GS-Melcotec Co.,Ltd.**
**Kyoto-shi, Kyoto 610-8397 (JP)**

(74) Representative:
**Grünecker, Kinkeldey,**
**Stockmair & Schwanhäusser**
**Anwaltssozietät**
**Maximilianstrasse 58**
**80538 München (DE)**

(54) **Battery lead, battery pack using the battery lead and assembled battery using the battery lead**

(57)    A battery lead is constituted by a strip-shaped lead main body made of aluminum or aluminum alloy and a connecting body made of a metal other than aluminum or aluminum alloy provided at one or both ends of said lead main body, the connecting body being connected to a cell or other parts.

*FIG. 1*

EP 1 077 497 A1

**Description**

BACKGROUND OF THE INVENTION

1. Field of the Invention

The present invention relates to a battery lead having a reduced weight and a low resistivity, and a battery pack and an assembled battery using the battery lead.

2. Description of the Related Art

In recent years, portable electronic apparatus have widely spread. Thus, lighter and miniaturized battery packs have been desired as power supplies. As secondary batteries there have heretofore been mainly used lead battery, nickel-cadmium battery and nickel-hydrogen battery. Small-sized and light-weight lithium ion batteries have recently been widely used as power supply particularly for portable telephones. However, it has been desired to further reduce the size and weight of these battery packs for the purpose of improving the users' convenience.
For example, a battery pack for portable telephone normally is constituted by cells, an electric circuit board having an electric protective function (hereinafter referred to as "protective circuit board"), a metallic lead connecting between the cells and the protective circuit board or between the cells (hereinafter simply referred to as "lead"), input and output terminals, and a resin housing for receiving these parts.
The reduction of the size and weight of a battery pack has been studied for each of the various parts. Thus, the reduction of the weight of lead has been desired. However, restrictions by the process of assembling a battery pack have prevented the study of an effective method for reducing the weight of the lead. The lead doesn't need to be reduced in size because it occupies in the battery pack in an extremely small volume.
The assembly of a battery pack is carried out by a process which comprises electrically connecting cells, a protective circuit and other parts with a lead, and then inserting the parts thus connected into a housing made of a resin. The connection of the lead to other parts is normally carried out by spot welding (electrical resistance welding), which has little thermal effect on the cell or other parts and can be effected at a remarkably higher working efficiency than soldering.
As the material constituting the lead, there is normally used nickel, which can be fairly spot-welded to the material with little defects. A nickel lead has heretofore been subjected to spot welding to connect the battery parts, thereby supplying a battery pack having a high reliability at a reduced cost.
However, nickel is not necessarily an optimum material from the standpoint of the capability of passing electric current. From the standpoint of electrical conductivity, copper has better characteristics than nickel. However, a copper lead is disadvantageous in that it cannot be fairly spot-welded to the material and the resulting junction has a reduced strength or stability, leaving something to be desired in connection to the cell or protective circuit.
Another method for connecting a copper lead is soldering, which is normally used for printed circuit board in electric circuit. However, when it is used in the assembly of battery pack, soldering can be effected at a drastically reduced working efficiency as compared with spot welding, adding to the production cost or causing thermal defects. Soldering is also disadvantageous in that the lead thus soldered to the cell or other parts can hardly be subjected to cleaning because of these parts, leaving solder ball behind which causes troubles.
As other materials having a good spot weldability, there are known iron and stainless steel. However, these metals have a lower electrical conductivity than nickel and thus have rarely been used as lead materials.
On the other hand, aluminum has a lower electrical conductivity than copper and exhibits a poor spot-weldability similarly to copper. Aluminum has a dense oxide layer formed on the surface thereof and thus exhibits a high contact resistance. Accordingly, aluminum has no merit as a lead material and thus has rarely been used as such.

SUMMARY OF THE INVENTION

It is an object of the present invention to provide a battery lead having a reduced weight and resistivity and an excellent reliability in spot welding to other parts which can substitute for nickel.
The battery lead according to the present invention comprises a strip-shaped lead main body made of aluminum or aluminum alloy and a connecting body made of a metal other than aluminum or aluminum alloy provided at one or both ends of the lead main body, the connecting body being connected to a cell or other parts.
In the present invention, the coefficient $\alpha$ represented by the following equation is smaller than 6.9:

$$\alpha = (R_1 \times V_1/100 + R_2 \times V_2/100) \times (S_1 \times V_1/100 + S_2 \times V_2/100)/8.9$$

wherein $R_1$ is the resistivity ($\mu\Omega \cdot$ cm) of the lead main body; $V_1$ is the volume ratio (%) of the lead main body in the entire lead; $S_1$ is the specific gravity of the metal constituting the lead main body; $R_2$ is the resistivity ($\mu\Omega \cdot$ cm) of the connecting body; $V_2$ is the volume ratio (%) of the connecting body in the entire lead; and $S_2$ is the specific gravity of the connecting body.

In the present invention, the connecting body is made of at least one selected from the group consisting of nickel, iron and stainless steel.

In the present invention, when the lead main body is made of aluminum and the connecting body is made of nickel, the volume ratio of aluminum in the entire lead is 1% or more. When the lead main body is made of aluminum and the connecting body is made of iron, the volume ratio of aluminum in the entire lead is 17% or more. When the lead main body is made of aluminum and the connecting body is made of stainless steel, the volume ratio of aluminum in the entire lead is 76% or more. When the lead main body is made of aldrey and the connecting body is made of nickel, the volume ratio of aldrey in the entire lead is 1% or more.

In the present invention, the junction between the lead main body and the connecting body is coated with an insulating member.

The battery pack or assembled battery according to the present invention comprises the foregoing battery lead.

In the case where an aluminum alloy is used as the material of the lead main body, the optimum volume ratio of the aluminum alloy can be calculated depending on the characteristics of the various alloys using the foregoing coefficient $\alpha$ because different alloys have different resistivities and specific gravities.

The foregoing lead comprises a connecting body made of nickel, iron or stainless steel and thus exhibits a good spot-weldability. In accordance with the present invention, a battery lead or lead structure in battery pack having a high electrical conductivity, a reduced size and weight, a good spot-weldability and a high reliability can be provided.

BRIEF DESCRIPTION OF THE DRAWINGS

In the accompanying drawings:

Fig. 1 is a diagram illustrating an embodiment a battery lead according to the present invention;
Fig. 2 is a diagram illustrating another embodiment of the battery lead according to the present invention;
Fig. 3 is a diagram illustrating a further embodiment of the battery lead according to the present invention; and
Figs. 4A and 4B are diagram illustrating an embodiment of the battery lead of the invention coated with an insulating member on the junction between the lead main body and the connecting body.

DETAILED DESCRIPTION OF THE INVENTION

The present invention will be described as follows in detail.

It is known that aluminum is inferior to copper in electrical conductivity but has the highest electrical conductivity next to copper and gold and has an extremely small specific gravity as compared with copper and nickel.

For example, the resistivity (specific resistivity: $\mu\Omega \cdot$ cm) of aluminum is as lowest next to copper (1.72) and gold (2.40) as 2.82. Aldrey, which is an aluminum alloy, has a resistivity of as low as 3.14. Nickel has a resistivity of as great as 6.9, which is four times that of copper and about 2.4 times that of aluminum. The resistivity of iron is 10.0. The resistivity of stainless steel in the form of SUS420 is 55.0. The specific gravity of aluminum and aldrey are each 2.7, which is only 30% of that of copper and nickel (8.9). The specific gravity of iron and stainless steel are 7.86 and 7.75, respectively.

As can be seen in the foregoing description, aluminum is a material which has no spot-weldability but is excellent in reduction of the weight and resistivity of lead.

The battery lead of the invention is constituted by a strip-shaped lead main body made of aluminum or aluminum alloy and a connecting body made of a metal other than aluminum or aluminum alloy provided at one or both ends of said lead main body, the connecting body being connected to a cell or other parts. The battery lead has a reduced weight characteristic to aluminum or aluminum alloy and a good spot-weldability characteristic to aluminum or metals other than aluminum.

Further, an important thing is that since the resistivity of copper is 1.72 $\mu\Omega \cdot$ cm, the lead of the invention has a lighter weight and lower resistivity than copper lead when the coefficient $\alpha$ falls below 1.72. Specific examples of optimum constitution will be given below.

In the case where the lead main body is made of aluminum and the connecting body is made of nickel, the volume ratio of aluminum in the entire lead is 78% or more. In the case where the lead main body is made of aluminum and the connecting body is made of iron, the volume ratio of aluminum in the entire lead is 82% or more. In the case where the lead main body is made of aluminum and the connecting body is made of stainless steel, the volume ratio of aluminum in the entire lead is 96% or more. In the case where the lead main body is made of aldrey and the connecting body is made of nickel, the volume ratio of aldrey in the entire lead is 81% or more.

The foregoing connecting body is provided at only one end or both ends of the lead main body made of aluminum or aluminum alloy depending on the purpose.

As the material constituting the connecting body made of a metal other than aluminum or aluminum alloy, there is preferably used a metal having a good spot-weldability such as nickel, iron and stainless steel.

The term "good spot-weldability" as used herein is meant to indicate spot welding that assures mechanical connection and provides the welded portion with a low electrical resistivity.

The volume ratio of the lead main body made of aluminum or aluminum alloy to the connecting body made of a metal other than aluminum or aluminum alloy in the battery lead can be properly controlled to provide a lighter weight and lower resistivity than copper lead having ideal electrical properties.

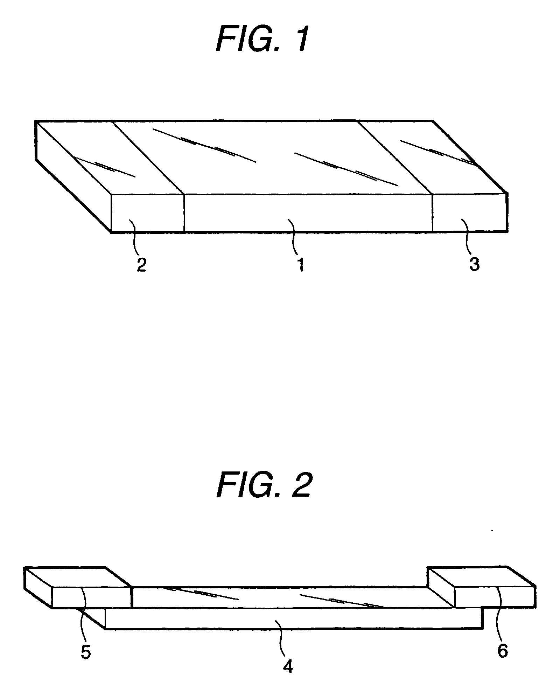

The shape of the battery lead according to the invention will be described hereinafter. Fig. 1 illustrates an embodiment of the battery lead according to the invention. In Fig. 1, the reference numeral 1 indicates a strip-shaped lead main body made of aluminum or aluminum alloy. The reference numerals 2 and 3 each indicate a strip-shaped connecting body made of a metal other than aluminum or aluminum alloy. The connecting body bodies 2 and 3 are connected to the battery or other parts.

Fig. 2 illustrates another embodiment of the battery lead according to the invention. In Fig. 2, the reference numeral 4 indicates a strip-shaped lead main body made of aluminum or aluminum alloy. The reference numerals 5 and 6 each indicate a strip-shaped connecting body made of aluminum or aluminum alloy. The lead main body 4 and the connecting body bodies 5 and 6 are connected to each other in such an arrangement that they partially overlap each other. The connecting body bodies 5 and 6 are connected to the battery or other parts.

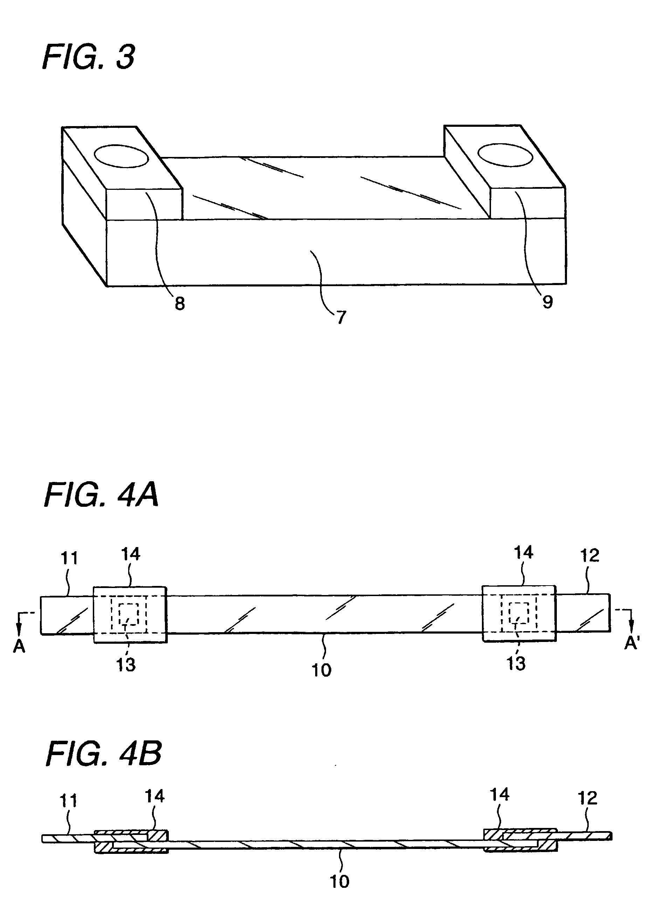

Fig. 3 illustrates a further embodiment of the battery lead according to the invention. In Fig. 3, the reference numeral 7 indicates a strip-shaped lead main body made of aluminum or aluminum alloy. The reference numerals 8 and 9 each indicates a strip-shaped connecting body made of a metal other than aluminum or aluminum alloy. The lead main body 7 and the connecting body bodies 8 and 9 are provided with a hole having the same size at the same position so that the battery lead can be connected to the battery or other parts with a bolt and nut.

Further, Figs. 4A and 4B illustrate an embodiment of the shape of a battery lead constituted by an insulating member-coated junction between the main body and the connecting body according to the invention. Fig. 4A is a plan view and Fig. 4B is a sectional view taken on the line A-A' of Fig. 4A. In these figures, the reference numeral 10 indicates a strip-shaped lead main body made of aluminum or aluminum alloy. The reference numerals 11 and 12 each indicate a strip-shaped connecting body made of a metal other than aluminum or aluminum alloy. The reference numeral 13 indicates a junction between the lead main body and the connecting body. The reference numeral 14 indicates an insulating member with which the junction between the lead main body and the connecting body is coated.

The connection between the lead main body made of aluminum or aluminum alloy and the connecting body made of a metal other than aluminum or aluminum alloy can be carried out by any known methods such as ultrasonic vibration, arc welding, laser welding and coating by arc padding process.

In the present invention, the junction is coated with an insulating member to have a double structure having a junction of metals and an insulating film portion. Thus, the junction exhibits a remarkably enhanced mechanical strength. Further, the metal coated with an insulating film is prevented from coming in contact with wet atmosphere and thus can hardly corrode. In this arrangement, the reliability of the junction can be enhanced. Thus, the reliability of the junction with time can be enhanced.

In accordance with the present invention, the use of an insulating member causes a weight increase. However, since the thickness of the insulating member used is from about scores of micrometers to 100 micrometers, the resulting weight increase is little. Nevertheless, the resulting strength increase is remarkable.

As the material of the insulating film with which the junction is coated, there may be used a synthetic resin, rubber, ceramics, glass or the like. Preferred among these materials is synthetic resin. Particularly preferred among these synthetic resins is polyester or polyimide resin, which can be easily worked and exhibits a high mechanical strength.

Referring first to the electric resistivity of aluminum/nickel lead, the relationship between resistivity and coefficient $\alpha$ will be described below using a model having varied volume ratios of aluminum to nickel. A model battery lead is constituted by a lead main body made of aluminum having a connecting body made of nickel provided at both ends thereof as in Fig. 1. Comparative products are conventional nickel lead and copper lead.

In order to make the essence of the present invention clear, description will be made in connection with the following configuration. The conventional model of nickel lead or copper lead has a length of 1 cm and a sectional area of 1 cm$^2$. In other words, the conventional model has a volume of 1 cm$^3$. Accordingly, the conventional model has a weight of 8.9 g (both nickel and copper have a specific gravity of 8.9).

The aluminum/nickel lead of the invention has a length of 1 cm and a weight of 8.9, which is the same as that of nickel lead and copper lead. Accordingly, the greater the aluminum content is, the smaller is the weight per unit volume and the greater is the sectional area. The properties of the aluminum/nickel lead of the invention with varied volume ratios of aluminum are set forth in Table 1.

In Table 1, the lead type A indicates nickel lead (conventional product), the lead type B indicates copper lead (conventional product), and the lead type C indicates aluminum/nickel lead. The coefficient $\alpha$ indicates the resistivity of the aluminum/nickel lead having the same weight and length as that of the nickel or copper lead.

Table 1

| Lead type | Volume ratio (%) | | | Resistivity ($\mu\Omega$) | Coefficient $\alpha$ |
|---|---|---|---|---|---|
| | Al | Ni | Cu | | |
| A | 0 | 100 | 0 | 6.90 | - |
| B | 0 | 0 | 100 | 1.72 | - |
| C | 1 | 99 | 0 | 6.81 | 6.81 |
| | 10 | 90 | 0 | 6.04 | 6.04 |
| | 30 | 70 | 0 | 4.49 | 4.49 |
| | 50 | 50 | 0 | 3.17 | 3.17 |
| | 70 | 30 | 0 | 2.07 | 2.07 |
| | 77 | 23 | 0 | 1.74 | 1.74 |
| | 78 | 22 | 0 | 1.70 | 1.70 |
| | 80 | 20 | 0 | 1.61 | 1.61 |
| | 90 | 10 | 0 | 1.20 | 1.20 |
| | 99 | 1 | 0 | 0.89 | 0.89 |

As can be seen in Table 1, when the volume ratio of aluminum is 1% or more, the coefficient $\alpha$ falls below 6.9, demonstrating that the resistivity of the aluminum/nickel lead is lower than that of the nickel lead. It can also been seen that when the volume ratio of aluminum is 81% or more, the coefficient $\alpha$ falls below 1.72, demonstrating that the resistivity of the aluminum/nickel lead is lower than that of the copper lead.

The coefficient $\alpha$ coincides with the resistivity of the aluminum/nickel lead. This is because the model of lead was selected to give easy understanding of the characteristics of the coefficient $\alpha$ and show that the coefficient $\alpha$ has the same meaning as resistivity.

In other words, when the length of the battery lead becomes twice, the resistivity of the battery lead, too, becomes twice. The coefficient $\alpha$ is determined by the properties of the material (resistivity, specific gravity) and the volume ratio but doesn't change with the dimension or shape. However, the coefficient $\alpha$ can be used only for the comparison with a metal having a specific gravity of 8.9 such as nickel and copper.

In some detail, the coefficient $\alpha$ is calculated from the resistivity, specific gravity and volume ratio of the metals constituting the lead main body and the connecting body. By comparing the coefficient $\alpha$ thus calculated with the resistivity of nickel (6.9) or copper (1.72), it can be easily judged if this lead has a lighter weight than the conventional nickel or copper lead.

In the present model, comparison was made in resistivity among leads having the same weight. In other words, the fact that the resistivity of the present model is lower than that of the nickel or copper lead means that when the sectional area of the present model is reduced to have the same resistivity as that of the nickel or copper lead, the present model has a lighter weight than the nickel or copper lead.

As a second embodiment, the properties of the aluminum/iron lead according to the invention will be described hereinafter. Table 2 shows the properties of the aluminum/iron lead with varied volume ratio of the lead main body made of aluminum to the connecting body made of iron.

In Table 2, the lead type A indicates an iron lead (conventional product), the lead type B indicates a copper lead (conventional product), and the lead type C indicates an aluminum/iron lead. The coefficient $\alpha$ indicates the resistivity of the aluminum/iron lead having the same weight and length as that of the nickel or copper lead.

Table 2

| Lead type | Volume ratio (%) | | | Resistivity ($\mu\Omega$) | Coefficient $\alpha$ |
|---|---|---|---|---|---|
| | Al | Fe | Cu | | |
| a | 0 | 100 | 0 | 8.83 | - |
| b | 0 | 0 | 100 | 1.72 | - |
| c | 10 | 90 | 0 | 7.66 | 7.66 |
| | 16 | 84 | 0 | 7.00 | 7.00 |
| | 17 | 83 | 0 | 6.89 | 6.89 |
| | 20 | 80 | 0 | 6.57 | 6.57 |
| | 40 | 60 | 0 | 4.46 | 4.46 |
| | 60 | 40 | 0 | 3.05 | 3.05 |
| | 80 | 20 | 0 | 1.78 | 1.78 |
| | 81 | 19 | 0 | 1.73 | 1.73 |
| | 82 | 18 | 0 | 1.68 | 1.68 |
| | 90 | 10 | 0 | 1.28 | 1.28 |
| | 99 | 1 | 0 | 0.89 | 0.89 |

As can be seen in Table 2, when the volume ratio of aluminum is 17% or more, the coefficient $\alpha$ falls below 6.9, demonstrating that the resistivity of the aluminum/iron lead is lower than that of nickel lead. It can be also seen that when the volume ratio of aluminum is 82% or more, the coefficient $\alpha$ falls below 1.72, demonstrating that the resistivity of the aluminum/iron lead is lower than that of copper lead.

As a third embodiment, the properties of the aluminum/stainless steel lead according to the invention will be described hereinafter. Table 3 shows the properties of the aluminum/stainless steel lead with varied volume ratios of the lead main body made of aluminum to the connecting body made of stainless steel.

In Table 3, the lead type A indicates a stainless steel lead (conventional product), the lead type B indicates a copper lead (conventional product), and the lead type C indicates an aluminum/stainless steel lead. The coefficient $\alpha$ indicates the resistivity of the aluminum/stainless steel lead having the same weight and length as that of the nickel or copper lead.

Table 3

| Lead type | Volume ratio (%) | | | Resistivity ($\mu\Omega$) | Coefficient $\alpha$ |
|---|---|---|---|---|---|
| | Al | Stain-less steel | Cu | | |
| a | 0 | 100 | 0 | 47.89 | - |
| b | 0 | 0 | 100 | 1.72 | - |

Table 3 (continued)

| Lead type | Volume ratio (%) | | | Resistivity (μΩ) | Coefficient α |
|---|---|---|---|---|---|
| | Al | Stain-less steel | Cu | | |
| c | 10 | 90 | 0 | 40.52 | 40.52 |
| | 30 | 70 | 0 | 27.56 | 27.56 |
| | 50 | 50 | 0 | 16.97 | 16.97 |
| | 70 | 30 | 0 | 8.75 | 8.75 |
| | 75 | 25 | 0 | 7.06 | 7.06 |
| | 76 | 24 | 0 | 6.74 | 6.74 |
| | 80 | 20 | 0 | 5.53 | 5.53 |
| | 90 | 10 | 0 | 2.89 | 2.89 |
| | 95 | 5 | 0 | 1.80 | 1.80 |
| | 96 | 4 | 0 | 1.60 | 1.60 |
| | 99 | 1 | 0 | 1.03 | 1.03 |

As can be seen in Table 3, when the volume ratio of aluminum is 76% or more, the coefficient α falls below 6.9, demonstrating that the resistivity of the aluminum/stainless steel lead is lower than that of nickel lead. It can be also seen that when the volume ratio of aluminum is 96% or more, the coefficient a falls below 1.72, demonstrating that the resistivity of the aluminum/stainless steel lead is lower than that of copper lead.

As a fourth embodiment, the properties of the aluminum alloy (aldrey)/nickel lead according to the invention will be described hereinafter. Table 4 shows the properties of the aluminum alloy (aldrey)/nickel lead with varied volume ratios of the lead main body made of aluminum to the connecting body made of stainless steel. The resistivity and specific gravity of aldrey are 3.14 and 2.7, respectively.

In Table 4, the lead type A indicates a nickel lead (conventional product), the lead type B indicates a copper lead (conventional product), and the lead type C indicates an aluminum alloy (aldrey)/nickel lead. The coefficient α indicates the resistivity of the aluminum alloy (aldrey)/nickel lead having the same weight and length as that of the nickel or copper lead.

Table 4

| Lead type | % Volume ratio | | | Resistivity (μΩ) | Coefficient α |
|---|---|---|---|---|---|
| | Al alloy | Ni | Cu | | |
| a | 0 | 100 | 0 | 6.90 | - |
| b | 0 | 0 | 100 | 1.72 | - |
| c | 1 | 99 | 0 | 6.81 | 6.81 |
| | 10 | 90 | 0 | 6.07 | 6.07 |
| | 30 | 70 | 0 | 4.57 | 4.57 |
| | 50 | 50 | 0 | 3.27 | 3.27 |
| | 70 | 30 | 0 | 2.19 | 2.19 |
| | 80 | 20 | 0 | 1.72 | 1.72 |
| | 81 | 19 | 0 | 1.68 | 1.68 |
| | 90 | 10 | 0 | 1.31 | 1.31 |
| | 99 | 1 | 0 | 0.99 | 0.99 |

As can be seen in Table 4, when the volume ratio of aluminum is 1% or more, the coefficient α falls below 6.9, demonstrating that the resistivity of the aluminum alloy (aldrey)/nickel lead is lower than that of nickel lead. It can be also seen that when the volume ratio of aluminum is 81% or more, the coefficient $\alpha$ falls below 1.72, demonstrating that the resistivity of the aluminum alloy (aldrey)/nickel lead is lower than that of copper lead.

The foregoing description has been made with reference to aldrey as aluminum alloy. However, as aluminum alloys to be used there may be used various aluminum alloys such as aludur and duralumin.

An important thing is that although different aluminum alloys have different resistivities and specific gravities, when the coefficient $\alpha$ of the aluminum alloy/nickel lead is predetermined to be less than that of nickel (6.9) or copper (1.72), the resulting aluminum alloy/nickel lead has a lighter weight or lower resistivity than nickel or copper lead.

Four types of leads according to the invention have been described. The connecting portion of these leads is made of nickel, iron or stainless steel and thus can be fairly spot-welded.

As mentioned above, in accordance with the present invention, a battery lead having a light weight and a good spot-weldability can be obtained. The battery lead of the invention can be used in a battery pack having a plurality of cells to electrically connect between the cells or between the cells and a protective circuit board.

The use of the battery lead of the invention allows easy assembly and thus provides a battery pack having a light weight and a high reliability in electrical connection.

Examples

The present invention will be further described with reference to preferred examples.

Example 1

An aluminum plate having a thickness of 0.45 mm, a length of 96 mm and a width of 10 mm as a lead main body was prepared. A stainless steel plate (SUS420) having a thickness of 0.30 mm, a length of 4 mm and a width of 10 mm were prepared. The stainless steel plates were connected to both ends of the aluminum plate to prepare a battery lead A of the invention having a total length of 100 mm and a shape shown in Fig. 2. In Fig. 2, the reference numeral 4 indicates an aluminum plate as a lead main body, and the reference numerals 5 and 6 each indicate a stainless steel plate as a connecting body. The margin for overlapping of the aluminum plate and the stainless steel plate was 2 mm. In order to connect the two plates, ultrasonic vibration was used. The volume ratio of aluminum was about 95%. The coefficient $\alpha$ was 1.85.

Example 2

An aluminum plate having a thickness of 0.20 mm, a length of 96 mm and a width of 10 mm as a lead main body was prepared. A nickel plate having a thickness of 0.15 mm, a length of 4 mm and a width of 10 mm was prepared. The nickel plates were connected to both ends of the aluminum plate to prepare a battery lead B of the invention having a total length of 100 mm and a shape shown in Fig. 2. The margin for overlapping of the aluminum plate and the nickel plate was 2 mm. In order to connect the two plates, arc welding was used. The volume ratio of aluminum was about 95%. The coefficient $\alpha$ was 1.05.

Example 3

An aluminum plate having a thickness of 0.20 mm, a length of 96 mm and a width of 10 mm as a lead main body was prepared. An iron plate having a thickness of 0.20 mm, a length of 4 mm and a width of 10 mm was prepared. The iron plates were connected to both ends of the aluminum plate to prepare a battery lead C of the invention having a total length of 100 mm and a shape shown in Fig. 2. The margin for overlapping of the aluminum plate and the iron plate was 2 mm. In order to connect the two plates, laser welding was used. The volume ratio of aluminum was about 92%. The coefficient $\alpha$ was 1.17.

Example 4

An aluminum alloy (aldrey) plate having a thickness of 0.20 mm, a length of 96 mm and a width of 10 mm as a lead main body was prepared. A nickel plate having a thickness of 0.20 mm, a length of 4 mm and a width of 10 mm was prepared. The nickel plates were connected to both ends of the aluminum alloy to prepare a battery lead D of the invention having a total length of 100 mm and a shape shown in Fig. 2. The margin for overlapping of the aluminum plate and the nickel plate was 2 mm. In order to connect the two plates, ultrasonic vibration was used. The volume ratio of aluminum was about 92%. The coefficient $\alpha$ was 1.12.

Example 5

An aluminum plate having a thickness of 9.2 mm, a length of 100 mm and a width of 10 mm was prepared. A nickel plate having a thickness of 1 mm, a length of 10 mm and a width of 10 mm provided with a hole having a diameter of 4 mm at a central portion thereof as a connecting body was prepared. The nickel plates were connected to the surface of both ends of the aluminum plate to prepare a battery lead E having a shape shown in Fig. 3. The aluminum plate was provided with a hole having the same size as that of the nickel plate in the same position as in the nickel plate.
The lead thus prepared is intended to be connected to other parts with a bolt and nut. The nickel plate had many wedge-shaped protrusions formed on the surface thereof in contact with the aluminum plate. By vertically pressing the laminate of the nickel plate and the aluminum plate, the wedge on the nickel plate cuts into the surface of the aluminum plate to pierce through the surface oxide layer, enhancing the electrical conductivity. The volume ratio of aluminum was about 98%. The coefficient $\alpha$ was 0.92.

Example 6

An aluminum plate having a thickness of 9.4 mm, a length of 100 mm and a width of 10 mm was prepared. A stainless steel plate having a thickness of 1 mm, a length of 10 mm and a width of 10 mm provided with a hole having a diameter of 4 mm at a central portion thereof as a connecting body was prepared. The stainless steel plate was connected to the surface of both ends of the aluminum plate to prepare a battery lead F having a shape shown in Fig. 3. The aluminum plate was provided with a hole having the same size as that of the stainless steel plate in the same position as in the nickel plate.
The lead thus prepared is intended to be connected to other parts with a bolt and nut. The stainless steel plate had many wedge-shaped protrusions formed on the surface thereof in contact with the aluminum plate. By vertically pressing the laminate of the stainless steel plate and the aluminum plate, the wedge on the stainless steel plate cuts into the surface of the aluminum plate to pierce through the surface oxide layer, enhancing the electrical conductivity. The volume ratio of aluminum was about 98%. The coefficient $\alpha$ was 1.19.

Comparative Example 1

As a counterpart against Examples 1 to 4, there was prepared a comparative lead G made of a single nickel plate having a thickness of 0.4 mm, a length of 100 mm and a width of 10 mm.

Comparative Example 2

As a counterpart against Examples 1 to 4, there was prepared a comparative lead H made of a single copper plate having a thickness of 0.1 mm, a length of 100 mm and a width of 10 mm.

Comparative Example 3

As a counterpart against Examples 5 and 6, there was prepared a comparative lead I made of a single nickel plate having a thickness of 3 mm, a length of 100 mm and a width of 10 mm. The battery lead was provided with two holes for fastening with a bolt and nut similarly to Examples 5 and 6 as shown in Fig. 3.

Comparative Example 4

As a counterpart against Examples 5 and 6, there was prepared a comparative lead J made of a single copper plate having a thickness of 3 mm, a length of 100 mm and a width of 10 mm. The battery lead was provided with two holes for fastening with a bolt and nut similarly to Examples 5 and 6 as shown in Fig. 3.
The weight, electrical resistance and other properties of these leads are set forth in Tables 5 and 6.

Table 5

| | Lead name | Material | Al volume ratio (%) | Weight (g) | Resistivity (mΩ) | Coefficient $\alpha$ |
|---|---|---|---|---|---|---|
| Example 1 | A | Al/SUS | 95 | 1.35 | 1.7 | 1.85 |
| Example 2 | B | Al/Ni | 94 | 0.63 | 1.6 | 1.05 |

Table 5 (continued)

|  | Lead name | Material | Al volume ratio (%) | Weight (g) | Resistivity (mΩ) | Coefficient α |
|---|---|---|---|---|---|---|
| Example 3 | C | Al/Fe | 92 | 0.64 | 1.6 | 1.17 |
| Example 4 | D | Al alloy/Ni | 92 | 0.66 | 1.7 | 1.12 |
| Comparative Example 1 | G | Ni | - | 3.56 | 1.7 | - |
| Comparative Example 2 | H | Cu | - | 0.89 | 1.7 | - |

Table 6

|  | Lead name | Material | Al volume ratio (%) | Weight (g) | resistivity (μΩ) | Coefficient α |
|---|---|---|---|---|---|---|
| Example 5 | E | Al/Ni | 98 | 26.1 | 31 | 0.92 |
| Example 6 | F | Al/SUS | 98 | 26.4 | 41 | 1.19 |
| Comparative Example 3 | I | Ni | - | 26.4 | 219 | - |
| Comparative Example 4 | J | Cu | - | 26.4 | 54 | - |

In Table 5, Examples 1 to 4 were compared with Comparative Examples 1, 2, 3 and 4. These examples are intended to clarify the difference in weight with the same resistivity. As can be seen in Table 5, the battery lead A of the invention has a coefficient α of 1.85, demonstrating that the battery lead A is lighter than the nickel lead G of Comparative Example 1 by about 60%. The battery leads B, C and D of the invention exhibit a coefficient α of 1.05, 1.17 and 1.11, respectively, which fall below 1.72, demonstrating that they are lighter than not only the nickel lead G of Comparative Example 1 but also the copper lead H of Comparative Example 2 by about 30%, 25% and 26%, respectively.

In Table 6, Examples 5 and 6 were compared with Comparative Examples 3 and 4. These examples are intended to clarify the difference in weight with the same resistivity. As can be seen in Table 6, the battery leads E and F of the invention have a coefficient α of 0.92 and 1.19, respectively, which fall below 1.72, demonstrating that the battery leads E and F are lower than not only the nickel lead I of Comparative Example 3 but also the copper lead J of Comparative Example 4 by about 43% and 24%, respectively. Thus, the leads of the invention have a lighter weight and lower resistivity than the conventional nickel lead or copper lead.

Example 7

An aluminum plate having a thickness of 0.15 mm, a length of 60 mm and a width of 3 mm was prepared. A nickel plate having a thickness of 0.15 mm, a length of 10 mm and a width of 3 mm was prepared. The nickel plates were connected to the both ends of the aluminum plate by ultrasonic vibration. Subsequently, the junction was coated with two sheets of polyester film having a thickness of 50 μm to prepare a battery lead K of the invention made of aluminum, nickel and polyester.

The structure of the lead K of the invention is as shown in Fig. 4. In Fig. 4, the reference numeral 10 indicates aluminum as a main body, the reference numerals 11 and 12 each indicate nickel as a connecting body, the reference numeral 13 indicates an ultrasonically-welded portion, and the reference numeral 14 indicates two sheets of polyester film thermally contact-bonded to cover the junction between the main body and the connecting body. The lead K is arranged such that the aluminum plate and the nickel plate are overlapped on each other at a wide area to measure the peeling strength. For actual use, the dimension of the overlapping margin may be minimum required for ultrasonic welding.

### Example 8

A battery lead L of the invention made of aluminum, nickel and polyimide was prepared in the same manner as in Example 7 except that the polyester film was replaced by a polyimide film.

### Example 9

A battery lead M of the invention made of aluminum, iron and polyester was prepared in the same manner as in Example 7 except that the nickel plate was replaced by an iron plate having the same dimension as the nickel plate.

### Example 10

A battery lead N of the invention made of aluminum, stainless steel and polyester was prepared in the same manner as in Example 7 except that the nickel plate was replaced by a stainless steel plate having the same dimension as the nickel plate.

### Comparative Example 5

A comparative lead O made of aluminum and nickel was prepared as a counterpart against Examples 7 and 8 in the same manner as in Example 7 except that the ultrasonically-welded portion was not coated with a polyester film or polyimide film. The structure of the lead O was as shown in Fig. 2.

### Comparative Example 6

A comparative lead P made of aluminum and iron was prepared as a counterpart against Example 9 in the same manner as in Example 9 except that polyester coating was not effected.

### Comparative Example 7

A comparative lead Q made of aluminum and stainless steel was prepared as a counterpart against Example 10 in the same manner as in Example 10 except that polyester coating was not effected.
The weight of the leads of Examples 7 to 10 and Comparative Examples 5 to 7 and the measurements of peeling strength of the ultrasonically-welded portion in these leads are set forth in Table 7.

Table 7

| | Lead name | Material of lead | Material of insulating film | Weight (g) | Peeling strength (Kgf) |
|---|---|---|---|---|---|
| Example 7 | K | Al/Ni | Polyester | 0.157 | 2.48 |
| Example 8 | L | Al/Ni | Polyimide | 0.157 | 2.63 |
| Comparative Example 5 | O | Al/Ni | None | 0.153 | 1.22 |
| Example 9 | M | Al/Fe | Polyester | 0.147 | 2.66 |
| Comparative Example 6 | P | Al/Fe | None | 0.144 | 1.26 |
| Example 10 | N | Al/SUS | Polyester | 0.148 | 2.55 |
| Comparative Example 7 | Q | Al/SUS | None | 0.144 | 1.24 |

First, Examples 7 and 8 were compared with Comparative Example 5. As can be seen in Table 7, the leads K and L of the invention made of aluminum and nickel and coated with polyester or polyimide exhibit a peeling strength of 2.48 kgf and 2.63 kgf, respectively, which is about twice that of the uncoated lead O of Comparative Example 5 (1.22 kgf).

It can also be seen that the lead M of Example 9 made of aluminum and iron and coated with polyester exhibits a peeling strength of about 2.1 times that of the uncoated lead P of Comparative Example 6 and the lead N of Example 10 made of aluminum and stainless steel and coated with polyester exhibits a peeling strength of about twice that of the uncoated lead Q of Comparative Example 7.

The weight increase due to coating with a synthetic resin film was only from 3 to 4 mg, which is only from 1 to 3% from the weight of the conventional lead free of synthetic resin film. Thus, despite the slight weight increase, the resulting effect of enhancing peeling strength is so remarkable as to almost double the peeling strength.

Examples of the battery pack according to the invention will be described hereinafter.

Example 11

A battery pack X1 of the invention having a nominal capacity of 1.3 Ah was prepared from the aluminum/nickel lead B of the invention of Example 2, a lithium ion cell, a protective circuit and a resin housing.

Example 12

A battery pack X2 of the invention having a nominal capacity of 1.3 Ah was prepared in the same manner as in Example 11 except that the aluminum/iron lead C of the invention of Example 3 was used.

Example 13

30 sets of lithium ion cell having a nominal capacity of 100 Ah were connected with the aluminum/nickel lead E of the invention of Example 5 to prepare an assembled battery Y1 of the invention.

Example 14

An assembled battery Y2 of the invention was prepared in the same manner as in Example 13 except that the aluminum/stainless steel F of the invention of Example 6 was used.

Comparative Example 8

A comparative battery pack X3 was prepared as a counterpart against Examples 11 and 12 in the same manner as in Example 11 except that the nickel lead G of Comparative Example 1 was used.

Comparative Example 9

A comparative battery pack X4 was prepared as a counterpart against Examples 11 and 12 in the same manner as in Example 11 except that the copper lead H of Comparative Example 2 was used.

Comparative Example 10

A comparative assembled battery Y3 was prepared as a counterpart against Examples 13 and 14 in the same manner as in Example 13 except that the nickel lead I of Comparative Example 3 was used.

Comparative Example 11

A comparative assembled battery Y4 was prepared as a counterpart against Examples 13 and 14 in the same manner as in Example 13 except that the copper lead J of Comparative Example 4 was used.

The weight, electrical resistance and other properties of these leads are set forth in Tables 8 and 9.

Table 8

| | Name of battery pack | Name of lead | Material | Coefficient $\alpha$ | Weight (g) | Resistivity of battery pack (m$\Omega$) |
|---|---|---|---|---|---|---|
| Example 11 | X1 | B | Al/Ni | 1.05 | 43.23 | 73 |
| Example 12 | X2 | C | Al/Fe | 1.17 | 43.24 | 73 |

Table 8 (continued)

|  | Name of battery pack | Name of lead | Material | Coefficient $\alpha$ | Weight (g) | Resistivity of battery pack (mΩ) |
|---|---|---|---|---|---|---|
| Comparative Example 8 | X3 | G | Ni | - | 46.16 | 73 |
| Comparative Example 9 | X4 | H | Cu | - | 43.49 | 73 |

Table 9

|  | Name of assembled battery | Name of lead | Material | Coefficient $\alpha$ | Weight (kg) | 1C discharge of assembled battery | |
|---|---|---|---|---|---|---|---|
|  |  |  |  |  |  | Discharge voltage (V) | Duration (min) |
| Example 13 | Y1 | E | Al/Ni | 0.92 | 75.81 | 108.25 | 62 |
| Example 14 | Y2 | F | Al/SUS | 1.19 | 75.82 | 108.22 | 61 |
| Comparative Example 10 | Y3 | I | Ni | - | 75.82 | 107.68 | 55 |
| Comparative Example 11 | Y4 | J | Cu | - | 75.82 | 108.18 | 59 |

First, in Table 8, Examples 11 and 12 were compared with Comparative Examples 8 and 9. These examples are intended to clarify the difference in weight of battery packs with the same resistivity. As can be seen in Table 8, due to the use of leads having a coefficient $\alpha$ of 1.05 and 1.17, the battery packs X1 and X2 of the invention are lighter than the battery pack X comprising the nickel lead of Comparative Example 8 and are lighter than the battery pack X4 comprising the copper lead of Comparative Example 9 by 0.26 g and 0.25 g, respectively.

In Table 9, Examples 13 and 14 were compared with Comparative Examples 10 and 11. These examples are intended to clarify the difference in resistivity, i.e., dischargeability, with the same weight. As can be seen in Table 9, due to the use of leads having a coefficient $\alpha$ of 0.92 and 1.19, respectively, the assembled batteries Y1 and Y2 of the invention exhibit a higher intermediate voltage and a longer duration of discharge than the assembled battery Y3 constituted by the nickel lead of Comparative Example 10 and the assembled battery Y4 constituted by the copper lead of Comparative Example 11.

Thus, the battery packs and assembled batteries of the invention have a light weight and a low resistivity as compared with those constituted by the conventional nickel or copper lead.

Example 15

The battery lead K of the invention made of aluminum, nickel and polyester of Example 7, a secondary lithium ion battery and a protective circuit board were spot-welded, and then received in a housing made of a polycarbonate resin to prepare a battery pack X5 of the invention.

Example 16

A battery pack X6 of the invention was prepared in the same manner as in Example 15 except that the battery lead L of the invention made of aluminum, nickel and polyimide of Example 8 was used.

Comparative Example 12

A comparative battery pack X7 was prepared in the same manner as in Example 15 except that the lead O of Comparative Example 5 made of aluminum and nickel free of synthetic resin coat was used.

The results of impact resistance made on these battery packs are set forth in Table 10. For the impact resistance test, the battery pack was dropped onto a concrete floor from a height of 1.5 m. When the battery pack was dropped by six times with the respective surface facing downward, it constitutes one cycle. Falling was made by 20 cycles at maximum.

Table 10

| | Name of battery pack | Name of lead | Material of lead | Material of insulating film | Number of cycles at which peeling occurs |
|---|---|---|---|---|---|
| Example 15 | X5 | K | Al/Ni | Polyester | Normal after 20 cycles of impact |
| Example 16 | X6 | L | Al/Ni | Polyimide | Normal after 20 cycles of impact |
| Comparative Example 12 | X7 | O | Al/Ni | None | Peeling occurs after 7 cycles of impact |

As can be seen in Table 10, the battery pack X7 of Comparative Example 12 having the ultrasonically-welded portion on the lead disconnected at the 7th cycle and thus could no longer be used. On the other hand, the battery pack X5 of the invention of Example 15 and the battery pack X6 of the invention of Example 16 showed no abnormality with the junction of lead even after 20 cycles of impact and thus could be used without any troubles.

In the foregoing examples, the effect of the invention have been described from the standpoint of reduction of weight or resistivity. However, this effect may be an effect of reducing the size of the battery. In other words, the present invention exerts an effect of reducing weight, resistivity and size of the battery.

In the foregoing examples, the connection between the aluminum portion and the portion made of a metal other than aluminum such as nickel, iron and stainless steel was carried out by ultrasonic vibration, arc welding, laser welding or fastening with a bolt and nut. However, any other ordinary connecting methods may be used.

In the foregoing examples, the metal other than aluminum or aluminum alloy constituting the connecting body was the same from one end to another of the lead (e.g., stainless steel/aluminum/stainless steel). However, the metals constituting the connecting body doesn't necessarily need to be the same at both ends of the lead. The metal constituting the connecting body may differ from one end to another of the lead as in nickel/aluminum/stainless steel structure. In some cases, the connecting body may be provided only at one of the lead.

In the foregoing examples, as the aluminum alloy, there was used aldrey. However, any other aluminum alloys such as aludur and duralumin may be used.

In the foregoing examples, aluminum constituting the lead main body and nickel, iron or stainless steel constituting the connecting body are connected to each other to form a battery lead of the invention. Alternatively, a layer of a spot-weldable material such as nickel may be directly formed on the surface of one or both ends of an aluminum plate as a lead main body by any coating method such as arc padding. A proper connecting method may be selected depending on the shape or structure of the battery lead.

The preparation of the battery lead of the invention can be accomplished by a method which includes connecting between the aluminum or aluminum alloy portion and the nickel, iron or stainless steel portion by ultrasonic vibration, arc welding or laser welding to prepare a battery lead of the invention, and then connecting the battery lead thus prepared to a cell or protective circuit, as used in Examples 1 to 4.

As another preparation method there may be used a method which includes separately preparing an aluminum portion and a nickel, iron or stainless steel portion, and then fastening them together with a bolt and nut during connection to a cell or other parts, as used in Examples 5 and 6.

In accordance with the present invention, a battery lead having a light weight, a low resistivity and a high reliability can be obtained. These effects can be finally exerted with battery pack. The greater the amount of battery lead used is, the more can be exerted these effects. In particular, the decrease of the weight and resistivity of the lead can be all reflected in the properties of battery pack.

In the present invention, the junction of the foregoing battery lead is coated with an insulating member to have a double structure having a junction of metals and an insulating film portion. Thus, the junction exhibits a remarkably enhanced mechanical strength. Further, the metal coated with an insulating film is prevented from coming in contact with wet atmosphere and thus can hardly corrode. In this arrangement, the reliability of the junction can be enhanced. Thus, the reliability of the junction with time can be enhanced.

The battery lead of the invention has been developed so as to be connected to other parts by spot welding, which can be easily effected. However, similar effect can be obtained even by any other connecting methods such as arc welding, laser welding, ultrasonic welding, soldering and fastening with a bolt and nut, which is used for assembled battery having a high capacity.

Accordingly, the effect of the present invention is not limited to battery pack for portable apparatus. The effect of the present invention can be obtained also with a structure having a large number of cells having a large capacity electrically connected thereto such as stationary emergency power supply and power supply for electric car.

Thus, the use of the battery lead of the invention makes it possible to reduce the weight and resistivity of battery pack and assembled battery.

**Claims**

1. A battery lead comprising:

    a strip-shaped lead main body comprising at least one of aluminum and aluminum alloy; and
    a connecting body comprising a metal other than aluminum or aluminum alloy provided at least one end of said lead main body, said connecting body being connected to a cell or other parts of the battery.

2. The battery lead according to claim 1, wherein the coefficient $\alpha$ represented by the following equation is smaller than 6.9:

$$\alpha = (R_1 \times V_1/100 + R_2 \times V_2/100) \times (S_1 \times V_1/100 + S_2 \times V_2/100)/8.9$$

    wherein $R_1$ is the resistivity ($\mu\Omega \cdot cm$) of the lead main body; $V_1$ is the volume ratio (%) of the lead main body in the entire lead; $S_1$ is the specific gravity of the metal constituting the lead main body; $R_2$ is the resistivity ($\mu\Omega \cdot cm$) of the connecting body; $V_2$ is the volume ratio (%) of the connecting body in the entire lead; and $S_2$ is the specific gravity of the connecting body.

3. The battery lead according to claim 1, wherein said connecting body comprises at least one selected from the group consisting of nickel, iron and stainless steel.

4. The battery lead according to claim 2, wherein said lead main body is made of aluminum, said connecting body is made of nickel and the volume ratio of aluminum is 1% or more.

5. The battery lead according to claim 2, wherein said lead main body is made of aluminum, said connecting body is made of iron and the volume ratio of aluminum is 17% or more.

6. The battery lead according to claim 2, wherein said lead main body is made of aluminum, said connecting body is made of stainless steel and the volume ratio of aluminum is 76% or more.

7. The battery lead according to claim 2, wherein said lead main body is made of aldrey, said connecting body is made of nickel and the volume ratio of aldrey is 1% or more.

8. The battery lead according to claim 1, further comprising an insulating member for coating the junction between said lead main body and said connecting body.

9. The battery lead according to claim 4, wherein said lead main body is made of aluminum, said connecting body is made of nickel and the volume ratio of aluminum is 78% or more.

10. The battery lead according to claim 5, wherein said lead main body is made of aluminum, said connecting body is made of iron and the volume ratio of aluminum is 82% or more.

11. The battery lead according to claim 6, wherein said lead main body is made of aluminum, said connecting body is made of stainless steel and the volume ratio of aluminum is 96% or more.

**12.** The battery lead according to claim 7, wherein said lead main body is made of aldrey, said connecting body is made of nickel and the volume ratio of aldrey is 81% or more.

**13.** A battery pack or assembled battery comprising a battery lead as defined in any one of claims 1 to 12.

## FIG. 1

2    1    3

## FIG. 2

5    4    6

## FIG. 3

8    7    9

## FIG. 4A

11    14    14    12

A ← → A'

13    10    13

## FIG. 4B

11    14    14    12

10

**European Patent Office**

## EUROPEAN SEARCH REPORT

Application Number

EP 00 11 7750

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | GB 2 083 278 A (BBC BROWN BOVERI & CIE, MANNHEIM, DE) 17 March 1982 (1982-03-17) * page 3, line 117 - page 4, line 11 * * figure 6 * | 1,13 | H01M2/20 |
| A | | 1,5,6 | |

TECHNICAL FIELDS SEARCHED (Int.Cl.7)

H01M

The present search report has been drawn up for all claims

| Place of search | Date of completion of the search | Examiner |
|---|---|---|
| THE HAGUE | 14 November 2000 | Peis, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EP 1 077 497 A1

## ANNEX TO THE EUROPEAN SEARCH REPORT
## ON EUROPEAN PATENT APPLICATION NO.

EP 00 11 7750

This annex lists the patent family members relating to the patent documents cited in the above-mentioned European search report.
The members are as contained in the European Patent Office EDP file on
The European Patent Office is in no way liable for these particulars which are merely given for the purpose of information.

14-11-2000

| Patent document cited in search report | Publication date | Patent family member(s) | Publication date |
|---|---|---|---|
| GB 2083278 A | 17-03-1982 | DE 3033117 A | 22-04-1982 |
| | | FR 2489603 A | 05-03-1982 |
| | | JP 57076750 A | 13-05-1982 |

For more details about this annex : see Official Journal of the European Patent Office, No. 12/82

EPO FORM P0459

20